# EUROPEAN PATENT APPLICATION

(11) **EP 0 871 129 A2**
(43) Date of publication of application: **14.10.1998**
(21) Application number: 98302308.6
(22) Date of filing: 26.03.1998
(51) Int. Cl.: G06F 13/38

(54) **A method for bursting processor data to or from an I/O device**

(30) Priority: 11.04.1997 US 837184
(71) Applicant: International Business Machines Corporation, Armonk, N.Y. 10504 (US)
(72) Inventor: Arimilli, L. Baba, Austin, Texas 78759 (US); Kaiser, John Michael, Cedar Park, Texas 78613 (US); Kim, Kyongmee L., Austin, Texas 78550 (US); Maule, Warren Edward, Cedar Park, Texas 78613 (US)
(74) Representative: Ling, Christopher John

(57) **Abstract**

An I/O bridge unit is used to allow burst transfers between a processor and an I/O device using normal cachable processor instructions, without modifying the processor or its interfaces. The I/O bridge unit intercepts cachable processor instructions to designated memory pages and processes "trigger" commands, to perform intermediate cache-emulation logic. Ultimately burst communications of appropriate byte-length are transacted between cache-emulation buffers and the processor or I/O device.

## Description

### FIELD OF THE INVENTION

This invention relates to a method for bursting processor data to or from an I/O device over a bus.

### BACKGROUND OF THE INVENTION

Computer systems such as computer workstations operate due to the passage of information between at least one microprocessor and various subsystems. Communications between the microprocessor(s) and subsystems occur over a data communication pathway called a bus. In a present-day system, there is often a need for Input/Output (I/O) subsystems, such as monitors, graphics adapters, and IDE-type devices, to receive or send information, via a bus, to or from a microprocessor.

Today's computer systems are being designed with microprocessors of ever-increasing speed; however, the I/O subsystems are not keeping pace. I/O devices are moving further away from the processors in terms of the chips and buses that must be crossed and in the increased latency of programmed operations to these devices. This is leading to a loss in potential performance when the processor is used in applications to send or receive data to or from the I/O devices. These applications can include using a processor to control graphics adapters and IDE-type devices.

Typically, these I/O devices are "mapped into" the memory space of the processor. Instead of issuing input/output instructions, as was common in older processors, today's processors issue memory-type instructions (e.g., loads or stores) to send/receive information to the I/O device, as if the device was part of the memory. However, rather than residing in memory, these devices in fact are attached to an I/O bus such as ISA or PCI. These devices must be mapped into the non-cachable memory space of the processor's memory, since these devices do not obey all the rules of cachable memory protocols, such as full coherency, burst ordering, deadlock prevention, etc. Because these devices are in non-cachable space, each processor access must be issued to the external bus and only very small data transfers can be made, with each load or store typically transferring 1-8 bytes of data. Since these buses are running several times slower than today's processors, severe loss of performance is generated by multiple transfers across the bus hierarchy (arbitration, crossing asynchronous boundaries, etc.)

In contrast, a processor's ability to send or receive data to/from cachable memory is made much more efficient by virtue of the ability to "burst" a large amount of data over the bus at one time. Instead of transferring 1-8 bytes per instruction, a cachable system can burst an entire cache line of data in one instruction (typically 32, 64, or 128 bytes).

In the current prior art scheme used to perform non-cachable fetches, the processor must wait to receive each packet of data it has requested from an I/O device. The current invention's emulation of a cache-line read from an I/O device helps overcome this limitation in prior art systems by enabling the processor to access additional data by accessing the cache (1-2 processor cycles) instead of performing additional fetches from the non-cachable memory mapped to the desired I/O device (hundreds of processor cycles).

A second benefit of this aspect of the invention is that it allows the processor to utilize its cache for pre- or post-transfer data processing while, at the same time, transferring additional data to or from the I/O device. Such a "pipelining" feature is not possible with the current method of programmed I/O transfers.

### DISCLOSURE OF THE INVENTION

The present invention relates to a method for bursting processor data to or from an I/O device within a computer system. The method is used to emulate the burst capabilities of a cachable system when the processor writes to, or reads from, a non-cachable I/O device. Thus, the method addresses many of the disadvantages found in prior art systems in which processors must send or receive data from non-cachable I/O devices using a DMA scheme.

The present invention is implemented within the context of a computer workstation system that allows information to be transferred between at least one microprocessor and at least one I/O device over at least one bus. The preferred embodiment comprises three modes of emulated cache-line data transfer: a WRITE from the processor to the I/O device; a READ, which transfers data from the I/O device to the processor; and a MOVE, which transfers data from one I/O device to another I/O device rather than to the processor. These functions are initiated by receipt of a "Write Trigger" or "Read Trigger" command from the processor to the memory/I/O controller of the system. In the preferred embodiment, the functions of the present method are performed in an I/O bridge unit, which is part of the memory/I/O controller. Upon receipt of a trigger command, the I/O bridge unit will initiate intermediate processing that transfers data between an I/O device and an internal cache-emulation buffer. The present method also provides for the I/O bridge unit to intercept processor cachable-read and -write instructions to memory pages designated as pages that are to participate in the emulated cache-line transfer scheme embodied in this invention. This is accomplished through the use of registers in the memory/I/O controller which are loaded with the addresses of designated memory pages to be mapped out of the main memory space and used as cache-emulation buffers. The I/O bridge unit can then associate the processor cachable-read and -write instructions to a corresponding I/O adapter address in I/O space or memory-mapped I/O space. This is accomplished through the use of registers in the memory/I/O controller which are loaded with I/O adapter addresses.

### BRIEF DESCRIPTION OF THE DRAWINGS

The invention will now be described, by way of example only, with reference to the accompanying drawings, in which:
Figure 1 is a computer system in which the present invention can be employed;
Figure 2 is a schematic representation of an internal memory map depicting various memory allocations and registers used in implementing the present method;
Figure 3 is a block diagram illustrating data flow in the present method between the microprocessor cache, the I/O bridge controller, and the I/O bus;
Figure 4 illustrates the format of the "trigger" commands;
Figure 5 is a flow chart of the processor functions involved in the WRITE portion of the present method;
Figure 6 is a flow chart of the processor functions involved in the READ portion of the present method;
Figure 7 is a flow chart of the operations of the I/O bridge unit ("Controller") in the present method;
Figure 8, a continuation of the flow chart represented in Figure 7, is a flow chart of the Controller's read trigger portion of the present method; and
Figure 9 is a flow chart illustrating the processor functions involved in the MOVE portion of the present method that allows emulated cache-line burst transfers of information from one I/O device to another.

### DETAILED DESCRIPTION OF THE INVENTION

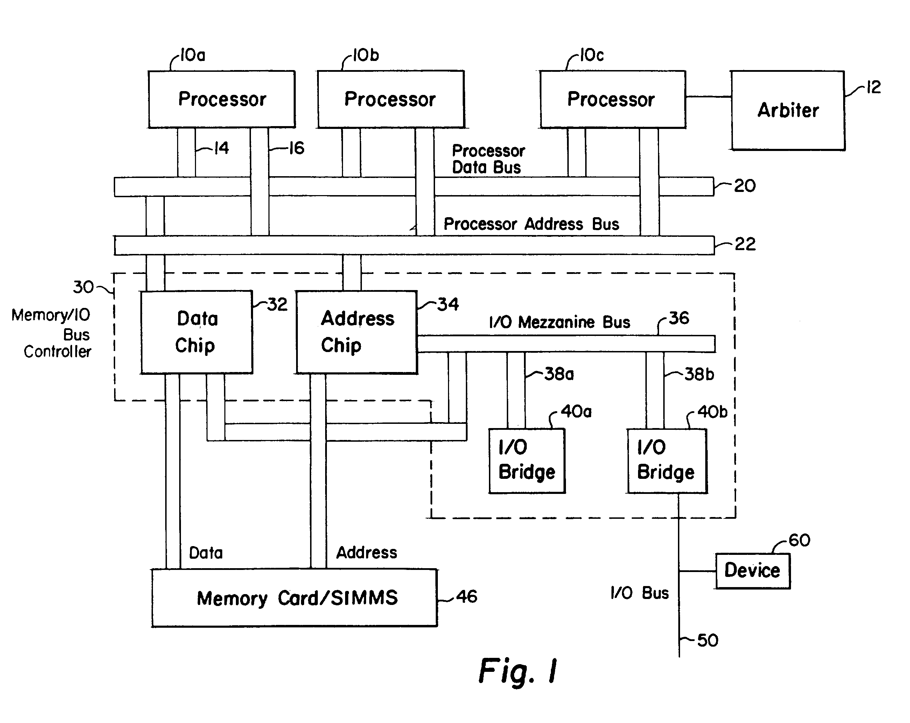

The method of the present invention is implemented in the context of a computer workstation system with at least one microprocessor and at least one I/O device that can utilize at least one bus to transfer information to each other. A computer system typically used in conjunction with a software operating system that controls communications between microprocessors and I/O devices is illustrated in Figure 1. A computer workstation system is the combination of interconnected components. For example, a microprocessor 10 is connected by data link 14 to a data bus 20 and connected by data link 16 to an address bus 22. Additional microprocessors 10b, 10c may be similarly connected to the processor data bus 20 and the processor address bus 22. An arbiter 12 generally processes requests from a processor 10 to assign access to the data bus 20 and address bus 22. While the preferred embodiment of the present invention includes multiple processors 10a, 10b, 10c, an alternative embodiment can include a single processor. Single processor systems do not require the arbiter 12.

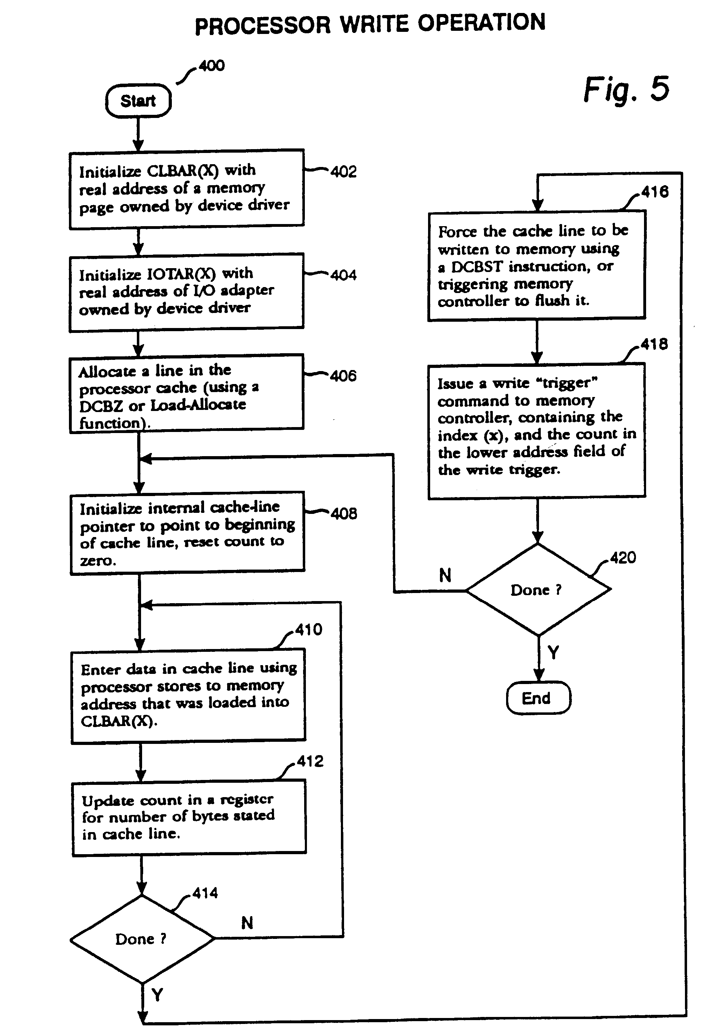

Computer workstation systems are additionally composed of at least one system memory card 46 or memory module. Once the arbiter 12 assigns access on the data bus 20 and address bus 22 in response to a processor 10 request, such request is typically processed by memory controller logic executed by a data chip 32 and an address chip 34. The memory controller can be optionally combined with the I/O bus controller function in one component called a memory/I/O bus controller 30. The memory/I/O bus controller 30 controls processor 10 access to memory 46 and to the I/O mezzanine bus 36. The I/O mezzanine bus 36 is connected by data link 38 to one or more I/O bridges 40 whose functionality may also be incorporated into the memory/I/O controller 30. In the preferred embodiment, the method of the present invention is performed in the I/O bridge 40. It should be noted that, while the emulation logic is performed by the I/O bridge 40 resident, in the preferred embodiment, in the memory/I/O controller 30, certain supporting functions must be performed by the processor 10. These processor functions are described in detail below in the discussion of Figures 5, 6, and 9.

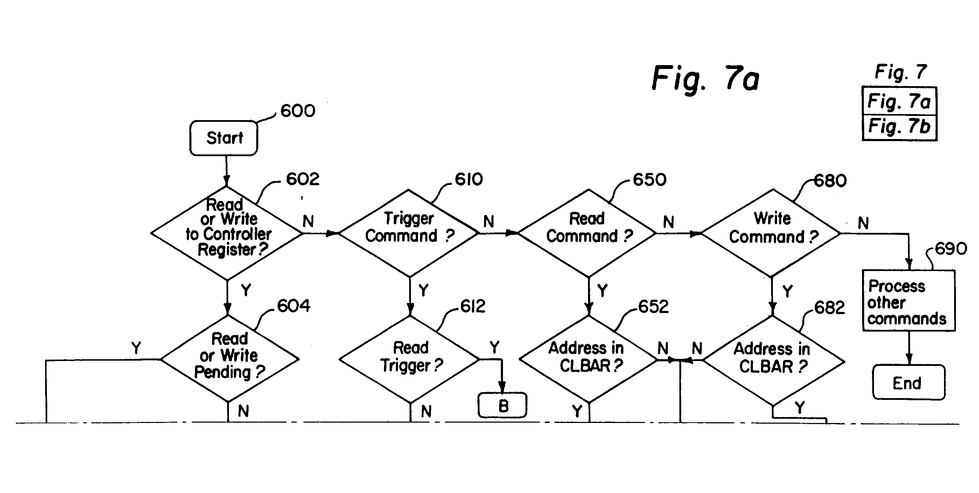

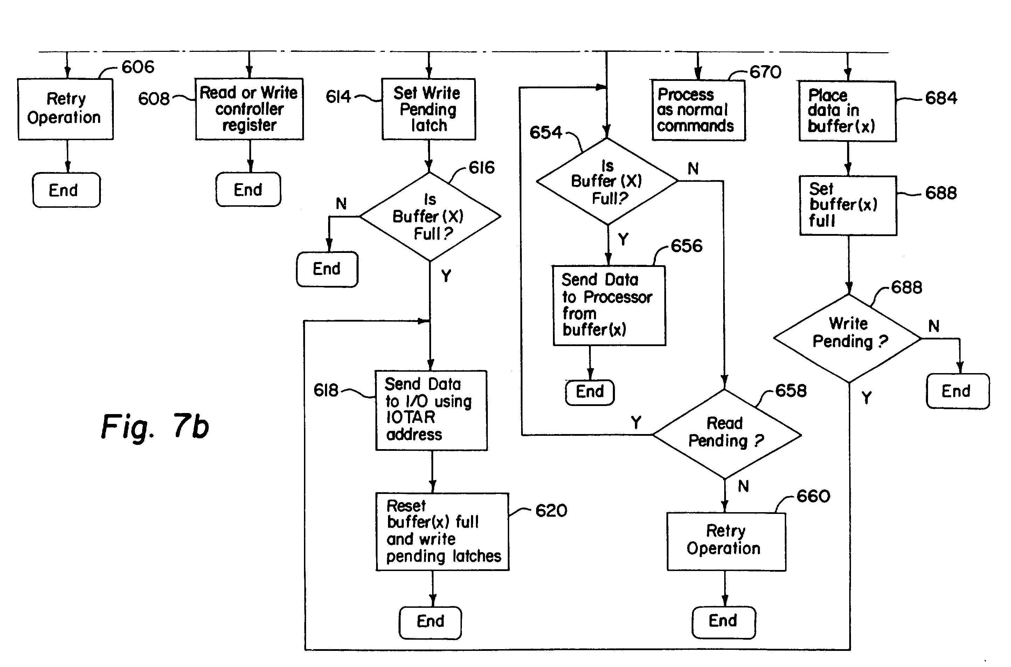

The I/O bridge 40 intercepts, as explained later, trigger commands and processor 10 requests for communication with an input/output device 60. The I/O bridge 40 then processes these requests to allow emulated cache-line burst transfers of data to or from the I/O device 60 over the I/O bus 50. This function is also explained below, in the discussion of Figure 7.

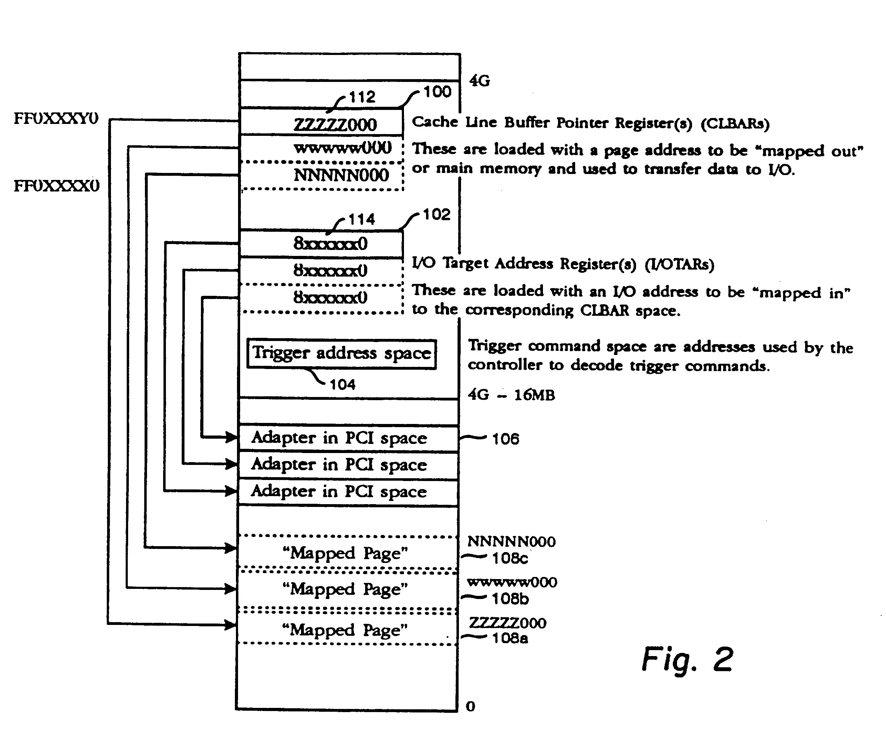

Figure 2 is a schematic representation of an internal memory map depicting various registers and memory space allocations used in implementing the invention. The cache line buffer address register ("CLBAR") 100 typically contains a page address 112 to be "mapped out" of memory 46 and used to transfer data to an I/O device 60. The address 112 in the CLBAR 100 corresponds to the initial memory address of a mapped page 108.

The I/O target address register ("IOTAR") 102 typically contains an I/O adapter address 114 in non-cachable memory. The address 114 in the IOTAR 102 corresponds to the initial address in memory-mapped I/O space of the I/O device 60.

In connection with Figure 2, it should be noted that the preferred embodiment contains multiple CLBAR registers 100 and multiple IOTAR registers 102. An index X 308 is used as an offset to access the particular desired pair of CLBAR 100/IOTAR 102 registers.

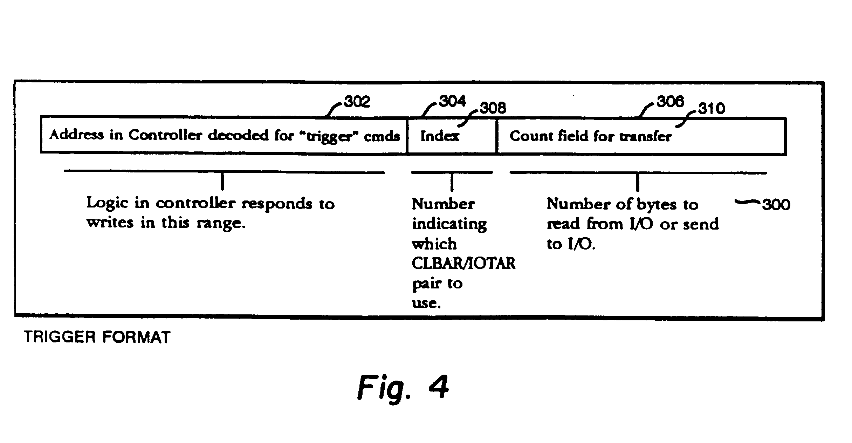

Finally, the trigger address space 104 is a predetermined range of addresses that are used by the memory/I/O controller 30 to decode the trigger commands that are explained below in connection with Figure 4.

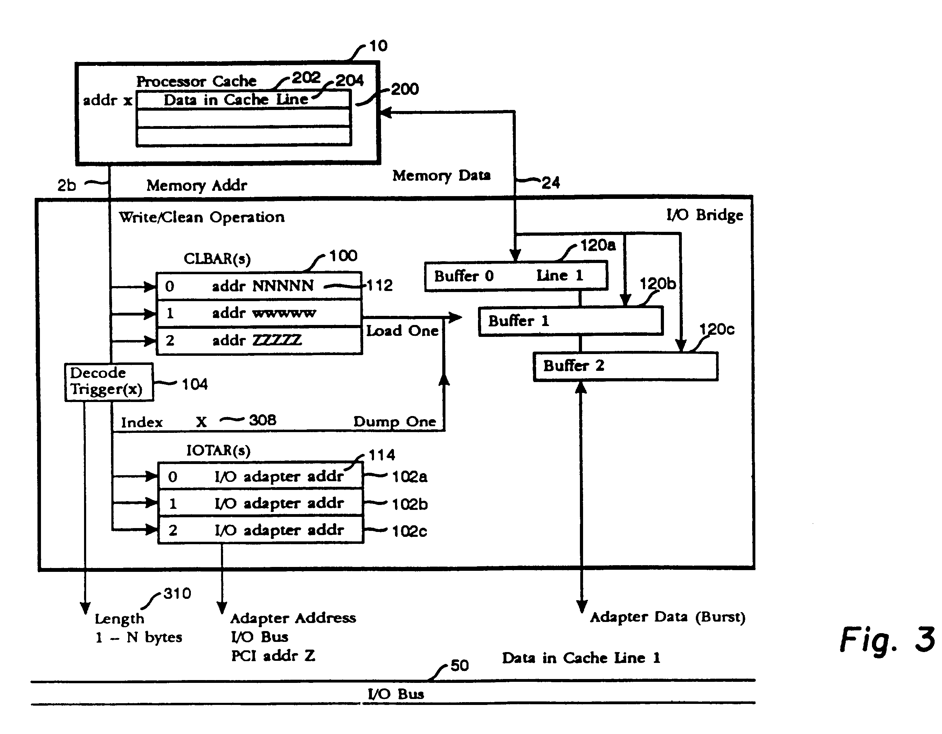

Figure 3 is a schematic representation of data flow between the microprocessor 10, the microprocessor cache 200, the I/O bridge 40, and the I/O bus 50. If the processor 10 requests to send or receive data from an address that matches the contents 112 of the CLBAR 100 indicating a designated "mapped page" 108, the I/O bridge controller 40 will intercept the instruction and proceed with the I/O burst emulation logic described below, ultimately transferring the appropriate amount of data over the I/O bus 50 between a cache-emulation buffer 120 and an I/O device. Otherwise, the system will perform a cache-line operation to memory 46 in a manner well known.

Figure 4 is a schematic representation of the data format of a "trigger" command 300. The trigger command 300 is issued by the processor 10 to the memory/I/O controller 30. The left-most bits 302 of a trigger command 30 contain an address that falls within the range of trigger address spaces 104 used by the controller 30 to decode trigger commands 300. The mid-order bits 304 contain a numerical index 308 which indicates which CLBAR 100/IOTAR 102 pair of addresses to be used for the desired operation. The right-most bits 306 contain a numerical value 310 representing the number of bytes of data to be transferred in the desired operation.

### PROCESSOR WRITE OPERATION

Figure 5 is a flow chart which illustrates the steps 400 executed by the processor 10 in initiating the WRITE operation of the present method. First, the processor attempts to initialize 402 an indexed CLBAR register 100 within the memory/I/O controller 30 with the real address 112 of a memory page 108. Similarly, the processor 10 also attempts to initialize 404 an IOTAR register 102 within the memory/I/O controller 30 with the real address 114 of the mapped I/O adapter in PCI space 106. Index X 308 is used to determine which CLBAR 100/IOTAR 102 pair of registers will be used for the operation. It should be noted that these initialization requests 402, 404 will be received (see 602 of Figure 7) by the memory /I/O controller 30. If a read or write is pending (see 604 of Figure 7), the initialization requests 402, 404 will be rejected by the controller 30 (see 606 of Figure 7), and must be retried by the processor 10. In the event of successful initialization of the proper CLBAR100/IOTAR102 pair, the processor next allocates 406 a line 202 in the processor cache 200 to be used for the write operation. The cache-line allocated is associated with the page 108 whose address 112 is programmed in the indexed CLBAR register 100. The processor 10 initializes 408 a pointer (not shown) to point to the beginning address of the cache-line 202. An internal cache-line byte-count (not shown) is also reset 408 to zero. The processor 10 next enters 410 data destined for I/O device 60 into the cache-line 202 using processor stores to the memory page 108 whose address 112 was loaded into the indexed CLBAR 100 being currently used. With each processor store, the internal cache-line pointer (not shown) is updated. The internal cache-line byte-count register (not shown) is also updated 412 to reflect the number of bytes of data stored in the cache-line 202.

When the processor 10 has completed 414 entering data for the current write operation into the cache-line 202, it forces 416 the data out of the cache 200 to the memory/I/O Controller 30 in a burst transaction of the full cache line 202. This action generates a processor write command which is intercepted and processed by the Controller 30 (See 680 of Figure 7). In order to initiate intermediate processing of the cache-emulation buffer 120, the processor issues 418 a write trigger command 300 in the format depicted in Figure 4. The trigger command 300 contains the current value 308 of the internal cache-line byte-count (not shown) in the right-most bits and also contains Index X 308 in the mid-order bits 304. Steps 408 through 418 may be repeated to accomplish additional I/O writes until the processor has no more data to send 420.

### PROCESSOR READ OPERATION

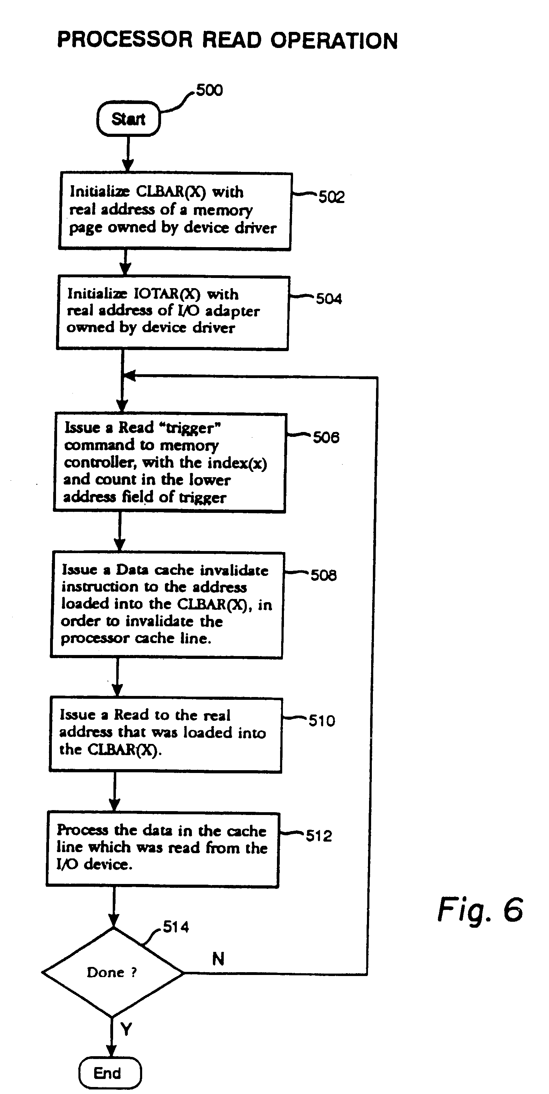

Figure 6 is a flow chart which illustrates the steps 500 executed by the processor 10 in initiating the READ operation of the present method. First, a CLBAR register 100 within the memory/I/O controller 30 is initialized 502 with the real address 112 of a memory page 108. Similarly, an IOTAR register 102 within the memory/I/O controller 30 is initialized 504 with the real address 114 of the mapped I/O adapter in PCI space 106. Index X 308 is used to determine which CLBAR 100/IOTAR 102 pair of registers will be used for the operation. The initialization steps 502, 504 will not be processed by the memory/I/O controller 30 if a read or write is pending (see 604, 606 of Figure 7). In the event of successful initialization, the processor 10 will issue 506 a read trigger command 300 in the format depicted in Figure 4. The numerical value 310 in the right-most bits 306 of the trigger command 300 represents the number of bytes of data to be transferred from the I/O device 60 to the processor cache 200. It should be noted that the read trigger command issued 506 by the processor 10 will not be processed by the memory/I/O controller 30 if the cache-emulation buffer 108 is already full. (See 616 of Figure 7). In such a situation, the processor 10 must retry the read trigger command.

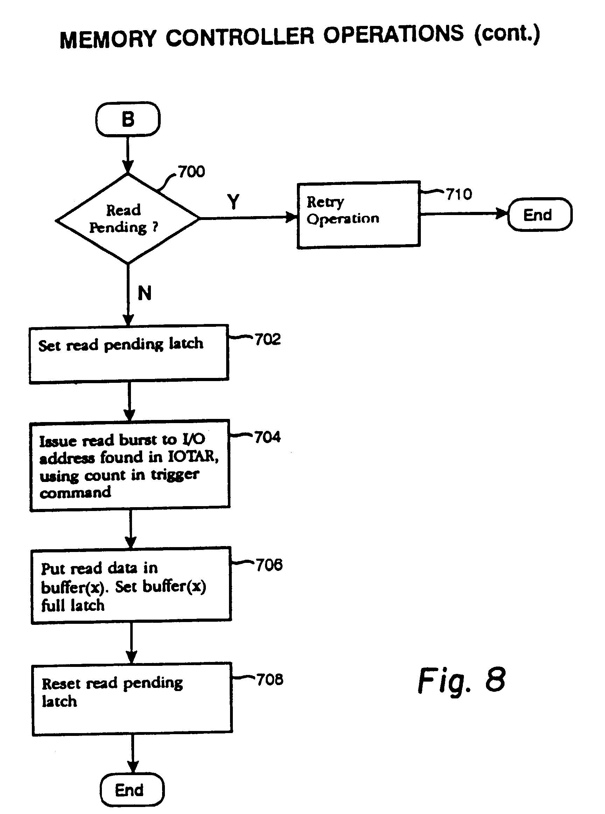

In order to keep from reading "stale" data, the processor initially invalidates 508 the processor cache-line 202. Processor 10 accomplishes this invalidation function by issuing a "data cache invalidate" instruction to the address 112 residing in the indexed CLBAR register 100. After the memory/I/O controller 30 processes the read trigger command issued 506 by the processor IO and fills the cache-line buffer 120 from I/O using burst transfers (see 704, 706 of Figure 8), the cache-line buffer 120 will be ready to be read into the processor cache-line 202. Thus, the processor issues 510 a Read instruction to the real address 112 that was loaded into the indexed CLBAR register 100. This operation functions to dump a cache-line block of data from the cache-line buffer 120 associated with the address 112 in the indexed CLBAR register 100 into the processor cache-line 202. The processor 10 may then proceed to process 512 the data in the cache-line 202. The processor may repeat steps 506-512 to request additional I/O reads until the processor no longer requires them 514.

### PROCESSOR MOVE OPERATION

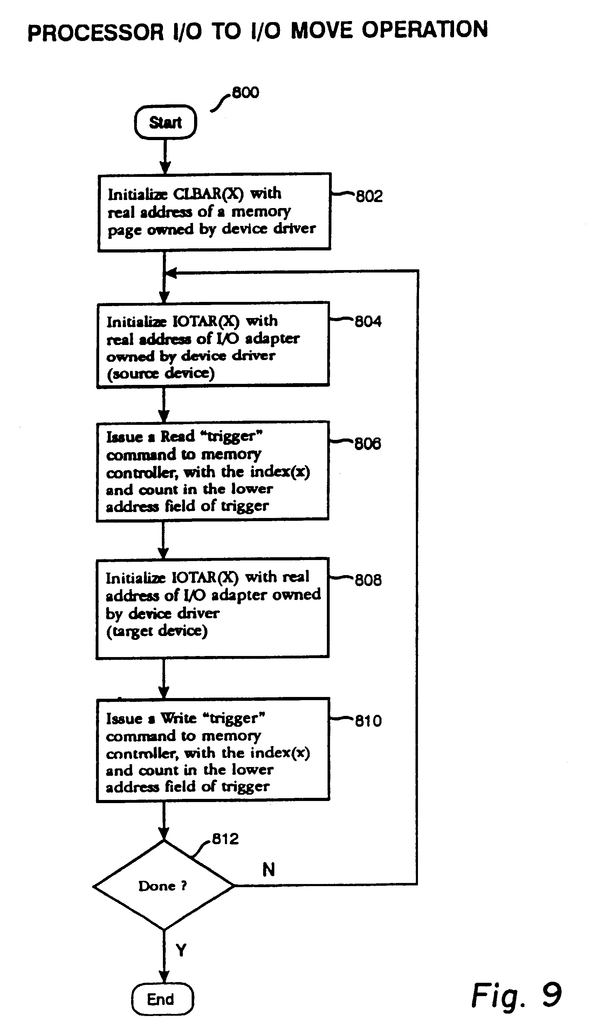

For certain applications, a processor 10 may command the Controller 30 to read a burst of data from one I/O device 60 into the cache-emulation buffer 120, reprogram the IOTAR 102, and trigger a write to another I/O device 60 without ever commanding a transfer of data into the processor cache 200. This is a highly useful function for compressing or uncompressing data, encoding data, etc. This function is the MOVE portion of the present invention. The steps 800 associated with this function are shown in the flow chart in Figure 9. To initiate the operation, the processor 10 requests 802 initialization of an indexed CLBAR register 100 with the real address 112 of a memory page 108 to be used in the MOVE operation. The processor 10 also requests 804 initialization of an indexed IOTAR register 102 with the real address 114 of an I/O adapter in PCI space 106. This address 114 corresponds to the source I/O device 60. As with the processor READ and WRITE functions, initialization steps 802 and 804 will not be processed by the memory/I/O controller 30 if a read or write is pending (see 604, 505 of Figure 7). In the event of successful initialization, the processor 10 will issue 806 a read trigger command 300 in the format depicted in Figure 4. (This will cause the memory/I/O controller 30 to issue 704 a read burst to the I/O address 114 found in the indexed IOTAR 102 and place 706 the read data in the cache emulation buffer 120 associated with the memory page address 112 in the CLBAR 100. See Figure 8). The processor then requests 808 initialization of the indexed IOTAR register 102 with the real address of the target I/O device 60. The processor next issues 810 a write trigger to the Controller 30. (This will cause the memory/I/O controller 30 to send 618 the data in the cache-emulation buffer 120 to the target I/O device 60. See Figure 7). Steps 804-810 may be repeated until the processor no longer requests 812 additional MOVE operations.

### MEMORY CONTROLLER OPERATIONS

Figure 7 is a flow chart of the functions performed by the memory/I/O controller ("Controller") 30 (specifically, the I/O Bridge Unit 40) in the present method. The Controller 30 performs four basic classes of functions: 1) initialization of CLBAR 100 and IOTAR 102 register contents 112, 114, respectively; 2) processing of trigger commands 300; 3) processing a cache-line "read" command from the processor 10; and 4) processing a cache-line "write" command from the processor 10. Initialization, represented by steps 602 - 608 in Figure 7, is a relatively minor function; the bulk of the Controller's 30 portion of the present method involves the processing of trigger commands 300, "read" commands, and "write" commands.

### Initialization

When the processor 10 attempts to read to or write from an address that corresponds to the range of addresses allocated for CLBAR 100 or IOTAR 102 registers, such attempt is intercepted by the Controller 30. The Controller 30 checks 602 to determine if the processor's 10 attempted read or write is destined for one of these registers 100, 102. If so, the controller 30 then determines 604 if a read or write cache-line burst emulation operation is in progress. (When processing a trigger command, the Controller sets these "pending" indicators to lock out reads or writes to/from the registers 100, 102. See 614 of Figure 7 and 702 of Figure 8). If so, the Controller 30 rejects 606 the read or write, causing the processor 10 to retry the operation. If no read or write is pending, the Controller 30 will update the contents 112 or 114 of the CLBAR 100 or IOTAR 102 register as requested by the processor 10.

### Trigger Commands

Emulated burst cache-line communications with an I/O device 60 is a two-step process. In order for the ultimate step - transmission of data to or from the processor cache 200 - to occur, an intermediate step must be performed. Processing of "trigger" commands 300 represents this intermediate step. This intermediate step involves dumping data from the internal cache-emulation buffer 120 to the I/O device 60 on a write operation. For read operations, the intermediate step involves fetching data from the I/O device 60 into the internal cache-emulation buffer 120. A trigger command 300 indicates to the Controller 30 how many bytes of data 310 are to be transferred to or from the I/O device 60 into or from an internal buffer 120, and which pair of CLBAR 100/IOTAR 102 registers to use. The address 114 in the indexed IOTAR register 102 indicates to the Controller 30 which I/O device 60 is to be involved in the operation. The address 112 in the indexed CLBAR register 100 to the Controller 30 which mapped page 108 is to be involved in the operation. Upon receipt of a trigger command 300 from the processor IO, the Controller 30 recognizes 610 its as a trigger command by determining that the left-most bits 302 contain an address that falls within the range of addresses allocated as trigger command space 104. These addresses 104 are used by the Controller 30 to decode trigger commands 300. If the Controller 30 has received a read trigger, the Controller performs the Read Trigger operation, as described below in connection with Figure 8. If the Controller 30 has received a write trigger, the Controller performs the intermediate I/O buffer-dump step as follows.

First, the Controller 30 sets 614 the write pending latch (not shown) to lock out processor 10 attempts to read to or write from CLBAR 100 or IOTAR 102 registers. The write pending latch is also vital to the processing of controller write commands (see 688 of Figure 7). If the cache-emulation buffer 120 corresponding to the address 112 at the indexed CLBAR register 100 is full 616, then the buffer is ready for transmission to the I/O device 60. Thus, the Controller 30 will send 618 data from such cache-emulation buffer 120 to the I/O device 60 by performing a burst move to the address 114 in the indexed IOTAR register 102. The Controller thus transfers the number of bytes 310 of data indicated in the write trigger command 300 to the adapter in PCI space 106, over the I/O bus 50. After this transfer of data, the Controller 30 resets 620 a "buffer full" indicator (not shown) and the write-pending latch (not shown). By this portion of the method, the Controller 30 has intercepted a cache-line write and performed the intermediate step of performing a burst transmission of appropriate byte length to the I/O device 60.

It should be noted that the processor 10 may issue 418 a write trigger command and write 416 the cache-line in any order. However, both must occur before the data in the cache-emulation buffer 120 can be sent 618 to the I/O device 60. This is the reason for the check 616 to verify that the buffer 120 has been filled upon receipt 610 of a write trigger command and for the check 688 to verify that a write trigger command has been received upon receipt 680 of a write command.

If a read trigger has been received 612, the Controller 30 will perform steps 700 - 710 shown in Figure 8. The Controller 30 will determine 700 if an intermediate emulated cache-line burst read operation is already pending. If so, the Controller 30 rejects 710 the read trigger transmission from the Controller 30, causing the processor 10 to retry the transmission. If no intermediate cache-line burst emulation read was previously in progress, the Controller 30 will accept the transmission and will initiate a read emulation by setting 702 the "read pending" latch (not shown). The Controller 30 then performs the intermediate read by issuing 704 a read burst to the I/O device 60 whose address 114 resides in the indexed IOTAR 102. This transmission receives the number of bytes 310 of data indicated in the right-most bytes 305 of the read trigger command previously decoded 610, 612 by the Controller 30. The data received during the intermediate I/O read operation 704 is stored 706 in the cache-emulation buffer 120 associated with the address 112 in the indexed CLBAR register 100. The Controller 30 then sets 706 a "buffer full" latch (not shown) to indicate that the intermediate read step is complete and the data is therefore ready for transmission to the processor cache 200. Because the intermediate read step is complete, the Controller 30 resets the "read pending" latch (not shown).

### Read Command

As described above in connection with Figure 6, during the READ portion of the present method, the processor 10 issues 506 a "read trigger" command to initiate intermediate buffer processing 508 and then also issues 510 a read instruction ("read command") to the real address 112 loaded in the indexed CLBAR register 100. The steps 650-660 associated with the Controller's 30 processing of this read command are shown in Figure 7.

If the Controller 30 determines 650 that a read command has been issued 510 from the processor 10 to the Controller 30, the Controller 30 checks 652 to determine if the processor 10 has attempted to read from an address falling within the range of addresses allocated as CLBAR registers 100. If not, the read is processed 670 as a normal cache-line read operation in a manner well known. If the read command has been attempted to a CLBAR 100 address, the Controller intercepts it and performs steps 654-660 as described below.

First, the Controller 30 determines 654 whether the cache-emulation buffer 120 associated with the indexed CLBAR 100 is full, and thus ready for transmission to the processor 10. If so, the data in the cache-emulation buffer 120 will be sent 656 to the processor 10 in a burst, thus completing the second step of the emulation method. If the cache-emulation buffer 120 is not full, the Controller 30 will wait for it to fill (i.e., the intermediate buffer-filling step is not yet complete) from the I/O device 60 by continuing to poll the 654 buffer 120 status. An error-checking feature of the present method will cause the Controller 30 to reject the read command if the cache-emulation buffer 120 is empty but there is no intermediate processing occurring. In such a case, if the Controller 30 detects 658 that the "read pending" latch (not shown) is reset (see 708 of Figure 8), the processor is forced 660 to retry the operation. After completion of a successful read, and if more data is desired from an I/O device 60, the present method allows the processor 10 to issue 506 another read trigger command 300, while at the same time processing the cache 202 data received in the previous read transfer 656. This overlap allows for an efficient "pipeline" effect not possible in prior I/O communications schemes.

### Write Command

As described above in connection with Figure 5, during the WRITE portion of the present method, the processor 10, upon filling the cache-line 202 to be transferred in a write operation, will attempt to force (see 416 of Figure 5) the data out of the cache 200. This action 416 generates a write command that is received by the memory/I/O controller 30. The Controller's 30 processing of such a write command is illustrated by steps 670-688 in Figure 7.

Upon receipt of a write command, the Controller 30 determines 682 whether the memory address of the attempted write is the address 112 programmed into the indexed CLBAR register 100. If so, the Controller 30 intercepts the data and stores 684 it in a buffer 120 associated with the indexed CLBAR register 100. The Controller 30 then marks the buffer 120 associated with the address 112 in the indexed CLBAR register 100 as full by setting 686 a "buffer full" latch (not shown).

It should be noted that the processor 10 may issue 418 a write trigger command and write 416 the cache-line in any order. As a result, the Controller must ensure, upon processing 680-688 a write command from the process 10, that the write trigger command has been received. To do so, the Controller 10, after filling 684, 685 the cache-emulation buffer, checks 688 to determine if a write is pending (i.e., a write trigger was previously received). Note that the Controller 30 sets 614 the write pending latch upon receipt 610 of a write trigger command. Thus, if both: 1) the processor has written cache-line 202 data to the cache-emulation buffer 120 and 2) a write trigger has been received, then the Controller 30 will send 618 the data from the cache-emulation buffer 120 to the I/O device and will reset 620 the "buffer full" latch (not shown) and the "write pending" latch (not shown). Of course, if the write command intercepted 680 by the Controller 30 does not attempt to write to the address 112 in the indexed CLBAR register 100, then a normal cache-line write operation will be performed 670 in a manner well known.

## Claims

1. A method of bursting data between an input/output device and a processor comprising the steps of:
(a) intercepting a cachable processor command requesting communication with the I/O device; and
(b) performing an intermediate cache emulation logic to process said processor command.

2. A method as claimed in Claim 1 further comprising:
(c) transferring a burst of data between a cache-emulation buffer and the I/O device.

3. A method as claimed in Claim 2 further comprising:
(d) performing a data transfer between said cache-emulation buffer and said processor.

4. A method as claimed in Claim 1 wherein step (a) further comprises intercepting a write trigger command from the processor.

5. A method as claimed in Claim 1 wherein step (a) further comprises intercepting a read trigger command from the processor.

6. A method as claimed in Claim 1 wherein step (b) further comprising performing emulation logic in an I/O bridge unit within a memory/I/O controller.

7. A method as claimed in Claim 6 wherein the I/O bridge unit intercepts processor cachable commands to at least one memory page.

8. A method as claimed in Claim 7 further comprising loading at least one register in the memory/I/O controller with an address of said memory page to be mapped out of a main memory space and used as a cache-emulation buffer.

9. A method as claimed in Claim 8 further comprising associating the processor cachable commands to a corresponding I/O adapter address in an I/O space or a memory-mapped I/O space.

10. A method as claimed in Claim 9 further comprising loading registers in the memory/I/O controller with I/O adapter addresses.

11. A method as claimed in Claim 3 further comprising intercepting a trigger command specifying a length of data transfer.

12. A method as claimed in Claim 1 wherein step (a) comprises specifying a set of emulation logic to be enabled.

13. A computer system as claimed in Claim 12 further comprising:
(d) means for performing data transfer between said cache-emulation buffer and said processor.

14. A computer system as claimed in Claim 11 further comprising means for performing emulation logic in an I/O bridge unit within a memory/I/O controller.

15. A computer system as claimed in Claim 14 wherein the I/O bridge unit intercepts processor cachable commands to at least one memory page.

16. A computer system as claimed in Claim 15 further comprising means for loading at least one register in the memory/I/O controller with an address of said memory page to be mapped out of a main memory space and used as a cache-emulation buffer.

17. A computer system as claimed in Claim 16 further comprising means for associating the processor cachable commands to a corresponding I/O adapter address in an I/O space or a memory-mapped I/O space.

18. A computer system as claimed in Claim 17 further comprising means for loading registers in the memory/I/O controller with I/O adapter addresses.

19. A computer system as claimed in Claim 18 further comprising means for associating the processor cachable commands to a corresponding I/O adapter address in an I/O space or a memory-mapped I/O space.

20. A computer system as claimed in Claim 19 further comprising means for loading registers in the memory/I/O controller with I/O adapter addresses.
